(19) Europäisches Patentamt
European Patent Office
Office européen des brevets

(11) **EP 2 860 320 B1**

(12) **FASCICULE DE BREVET EUROPEEN**

(45) Date de publication et mention de la délivrance du brevet:
**03.03.2021 Bulletin 2021/09**

(51) Int Cl.:
***E04B 1/80*** *(2006.01)*     ***E04B 1/90*** *(2006.01)*
***E04F 15/18*** *(2006.01)*     ***E04F 15/20*** *(2006.01)*

(21) Numéro de dépôt: **14188195.3**

(22) Date de dépôt: **08.10.2014**

(54) **Plancher thermiquement isolant incluant des panneaux PIV, module de plancher et kit d'assemblage**

Wärmeisolierter Boden mit Vakuumisolationspaneelen (VIP), Bodenmodul und Montage-Kit

Thermally insulating floor including VIP panels, floor module and assembly kit

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2013 FR 1359772**

(43) Date de publication de la demande:
**15.04.2015 Bulletin 2015/16**

(73) Titulaire: **Electricité de France**
**75008 Paris (FR)**

(72) Inventeurs:
- **Milleville, Pierre-Henri**
**77670 Vernou La Celle (FR)**
- **Colmet-Daage, Mathilde**
**77300 Fontainebleau (FR)**
- **Bernard, Jean-David**
**77190 Dammarie Les Lys (FR)**
- **Petiot, Philippe**
**77670 Saint Mammes (FR)**
- **Duforestel, Thierry**
**77250 Moret Sur Long (FR)**

(74) Mandataire: **Plasseraud IP**
**66, rue de la Chaussée d'Antin**
**75440 Paris Cedex 09 (FR)**

(56) Documents cités:
**WO-A1-2013/086005**     **WO-A1-2014/095277**

## Description

La présente invention concerne, notamment dans le domaine du bâtiment, les installations d'isolation thermique utilisées pour recouvrir une surface au sol. L'invention se rapporte plus particulièrement aux systèmes formant un plancher qui incorporent une couche isolante formée de panneaux élémentaires isolants, de préférence de type PIV (Panneau Isolant sous Vide), et au moins une couche externe de revêtement typiquement rigide et sensiblement plane. L'invention concerne également un module de plancher et un kit d'assemblage permettant d'obtenir un plancher thermiquement isolant.

Les planchers d'habitation, en particulier dans les bâtiments construits avant 1975, constituent une zone de déperdition thermique importante dans la mesure où avant cette date, on n'intégrait jamais d'isolant thermique dans les planchers. Il existe donc de manière générale un besoin pour mieux isoler les sols.

Lorsque l'on souhaite obtenir des performances élevées d'isolation d'une paroi, l'utilisation de panneaux PIV est recommandée. Cependant, la fragilité de ces panneaux limite leur utilisation à d'autres types d'application que pour la rénovation de plancher.

Pour rappel, les panneaux élémentaires de type PIV comprennent un matériau de cœur poreux isolant (par exemple à structure micro-cellulaire ou nano-cellulaire à cellules ouvertes) maintenu sous vide par une enveloppe barrière garantissant l'étanchéité aux gaz. L'enveloppe barrière est souple et intègre généralement un film thermo-soudable. Ces panneaux forment des plaques d'épaisseur sensiblement constante et présentent de grandes tailles, par exemple 600 mm de largeur et 1200 mm de longueur (d'autres largeur, par exemple de 300 mm, 400, 500 jusqu'à à 1200 mm étant bien entendu disponibles, la longueur variant généralement entre 500 et 2000 mm). La taille de ces panneaux convient donc pour le recouvrement de parois de bâtiments à des fins d'isolation thermique. De plus, la performance thermique de ces panneaux élémentaires conduit à des épaisseurs qui peuvent être réduites pour minimiser l'encombrement du système d'isolation thermique, l'épaisseur d'un panneau pouvant être inférieure à 60 mm, et de préférence inférieure à 35 mm.

Dans le domaine, on qualifie de super isolants thermiques des matériaux présentant, à température ambiante, un niveau de conductivité thermique inférieure à 0,025 W m$^{-1}$ K$^{-1}$. Les panneaux PIV ont une conductivité thermique inférieure à 0,007 W m$^{-1}$ K$^{-1}$, et plus préférentiellement inférieure à 0,005 W m$^{-1}$ K$^{-1}$.

Dans les panneaux élémentaires de type PIV, tous les gaz présents sont évacués du matériau poreux super isolant avant un conditionnement sous vide au sein d'une enveloppe barrière souple généralement constituée (de façon connue en soi) d'un film thermo-soudable pouvant être métallisé qui permet en outre d'éviter la formation de ponts thermiques au niveau des tranches.

L'utilisation de tels panneaux élémentaires pour réaliser une installation d'isolation thermique est délicate du fait que l'enveloppe barrière (très mince) est fragile. Ce type de panneau ne tolère pas d'efforts de compression ou de flexion qui sont susceptibles d'allonger localement l'enveloppe et de dégrader ses propriétés de barrière aux gaz. De ce fait, l'utilisation de panneaux de type PIV a été limitée.

Le document WO 2013/086005 montre une solution d'intégration de tels panneaux dans des enveloppes rigides formées de deux coques moulées identiques, pour former des modules. En pratique, la superposition d'une couche de matière ondulée sur le panneau de type PIV est insuffisante pour garantir durablement l'intégrité de l'enveloppe barrière du panneau enfermé entre les deux coques, surtout dans le cas d'une application de plancher, avec des sollicitations plus importantes à la fois sur la surface externe et au niveau des parois latérales. L'utilisation d'organes d'ancrage externes aux caissons rend la mise en place complexe. Les parois latérales des coques doivent être robustes et typiquement épaisses, ce qui a pour inconvénient de fortement diminuer la performance globale d'isolation thermique. Il est donc considéré que ce mode d'intégration est inadapté aux contraintes généralement rencontrées pour un plancher.

Il est connu, par le document DE 20 2007 001 461 U1, l'utilisation de dalles composites creuses et allongées pour réaliser la structure d'une paroi isolante et incorporer des panneaux de type PIV. La cavité interne des dalles est remplie par une couche interne de béton et par un panneau de type PIV. Une paroi composée de telles dalles peut en outre être recouverte d'une couche d'isolation conventionnelle. Un renforcement est requis pour connecter convenablement ces dalles et obtenir une bonne tenue mécanique. Pour cela, les dalles présentent des ouvertures (par exemple des ouvertures latérales) permettant l'insertion de barres ou vis de liaison métalliques. Dans le cas d'un plancher, ces vis de liaison sont noyées dans le béton des couches internes de deux dalles adjacentes. Une couche de matériel adhésif est en outre typiquement utilisée entre deux dalles.

Si l'insertion de panneaux PIV dans le creux de dalles, comme montré dans DE 20 2007 001 461 U1, permet d'obtenir une efficacité d'isolation améliorée, ce type de technique impose toutefois des travaux qualifiés de lourds, notamment au regard de la pose et la connexion de dalles de grandes dimensions. De plus, l'épaisseur du plancher obtenu est très importante et de l'ordre d'au moins trois fois l'épaisseur de la couche thermiquement isolante formée par les panneaux PIV. Or une épaisseur de l'ordre de 10 cm (ou même supérieure à 50 mm) est souvent rédhibitoire pour des applications de rénovation.

Par ailleurs dans le domaine de l'isolation des planchers de sol existants, il existe des méthodes de mise en place d'éléments de plancher qui sont esthétiques et décoratifs, avec une pose directement sur le sol existant (que ce substrat soit isolé thermiquement ou pas). Ces éléments de revêtement sont soit de type « moquette ou nattes » déroulés et/ou collés sur le substrat, soit, ce sont des éléments modulaires disposant d'un système d'assemblage entre les modules, comme par exemple les éléments modulaires « clipsables » de parquet bois ou stratifié.

Mais, si ces éléments modulaires de planchers décoratifs apportent confort et esthétisme et sont peu conducteurs de chaleur puisque souvent en bois ou en matière synthétique, ils ne peuvent pas pour autant être considérés comme des isolants thermiques capables de ralentir un flux de chaleur au sens de la réglementation thermique (matériau de conductivité thermique $\lambda$ < 0,065 W m$^{-1}$ K$^{-1}$ conduisant à une résistance thermique rapportée inférieure à 0.15 m$^2$ K W$^{-1}$ par centimètre d'épaisseur). En France en particulier, des contraintes réglementaires en rénovation imposent qu'un isolant rapporté sur le plancher présente une résistance thermique d'au moins 2 m$^2$.K W$^{-1}$. Autrement dit, de tels éléments de plancher ne peuvent pas assurer la fonction d'isolation thermique sur un plancher existant qui n'était pas isolé.

Il existe donc un besoin pour des solutions de rénovation de plancher peu encombrantes en épaisseur, qui permettent d'améliorer très significativement les performances d'isolation thermique, et permettant de simplifier la pose pour l'utilisateur.

La présente invention a notamment pour but de pallier tout ou partie des inconvénients précités.

A cet effet, il est proposé selon l'invention un plancher thermiquement isolant pour doubler une paroi de sol, le plancher comprenant :

- une couche décorative de revêtement, formant une couche supérieure du plancher ;
- des panneaux isolants ayant chacun une forme de plaque, chacun des panneaux comprenant un matériau poreux résistant à la compression et une enveloppe barrière étanche aux gaz, fermée sous vide, qui renferme le matériau poreux, les panneaux étant répartis en au moins une couche de panneaux espacée par rapport à la couche décorative, et de préférence située entre des moyens d'isolation acoustique et la couche décorative ;
- au moins une couche de protection mécanique, isolante à l'humidité et agencée entre la couche d'isolation thermique et la couche décorative, comprenant une pluralité d'éléments de protection ;
- une ossature pour fixer et maintenir les panneaux sous la couche décorative, de sorte que la couche d'isolation thermique présente une face supérieure du côté de la couche décorative et une face inférieure opposée à la face supérieure, l'ossature comprenant une pluralité de caissons rigides structurant la couche d'isolation thermique, sachant que chaque caisson est pourvu d'un fond, d'un ensemble de parois latérales et d'une ouverture supérieure (7) délimitée par un bord supérieur (5b) annulaire du caisson ;

dans lequel le volume intérieur des caissons contient au moins un des panneaux isolants ;

et dans lequel la couche décorative comprend des éléments de revêtement rigides qui comprennent chacun une face inférieure en vis-à-vis de, et de préférence en contact avec, un des éléments de protection, les éléments de revêtement comprenant en outre des organes d'interconnexion pour connecter bord à bord deux éléments de revêtement adjacents.

Le plancher thermiquement isolant comporte en outre les moyens d'isolation acoustique qui sont distincts de la couche de protection mécanique et sous forme d'une couche formée d'éléments d'isolation acoustique, ledit volume intérieur étant délimité par l'ensemble de parois latérales et rempli par un ensemble multicouche qui ne s'étend pas au-delà du bord supérieur. L'ensemble multicouche comprend :

- un des éléments d'isolation acoustique du côté du fond du caisson au-dessus du plan de base du caisson ;
- un des éléments de protection mécanique, plus proche de l'ouverture supérieure que la couche d'isolation thermique ;
- un des panneaux isolants, à distance de l'ouverture supérieure et entre ledit élément d'isolation acoustique et ledit élément de protection mécanique.

Ainsi, les panneaux isolants, par exemple de type PIV, sont maintenus et protégés sous des éléments de revêtement (ayant par exemple une structure de lames de parquet) qui forment un surface décorative continue. Une couche de panneaux est formée avec un espacement réduit par rapport aux éléments de revêtement, avec typiquement une unique couche intercalaire formée par les éléments de protection.

L'enveloppe externe du panneau de type PIV reste parfaitement intègre lorsque des efforts s'exercent sur la couche supérieure formée par les éléments revêtement externe et il est permis de rapprocher au maximum les panneaux PIV adjacents, en l'absence de reliefs de connexion autour du volume intérieur (cavité de remplissage unique formée entièrement par le caisson). De préférence, les éléments de revêtement ont un périmètre sensiblement identique au périmètre des caissons. La couche d'isolation thermique est alors définie essentiellement par les panneaux PIV, les espaces intercalaires pouvant être négligeables. A titre d'exemple, les parois latérales ont une épaisseur réduite de l'ordre de 1 ou 2 mm et forment ainsi un écartement entre les panneaux qui est inférieur à 4 mm, sans possibilité de circulation d'air ou autre fluide le long des tranches des panneaux. On obtient ainsi une étanchéité à l'air. Le cas échéant un joint additionnel peut être prévu à proximité des organes d'interconnexion.

En outre, le fait de prévoir des organes d'interconnexion complètement en dehors de la couche d'isolation thermique et qui permettent un raccordement amovible, facilite les opérations de démontage qui peuvent être alors envisagés. On comprend que les caissons et le cas échéant les panneaux élémentaires de type PIV peuvent être récupérés après un tel démontage. En utilisant des caissons pour réaliser l'ossature, on obtient un gain de temps pour l'assemblage et une réduction de coût liée à l'utilisation de panneaux de fabrication standard (qui peuvent présenter une taille relativement importante).

Selon une particularité, chaque caisson est pourvu d'une ouverture supérieure délimitée par un bord supérieur annulaire du caisson, les éléments de revêtement obturant chacun hermétiquement l'ouverture d'un caisson, sachant que le volume intérieur des caissons contient au moins un des éléments d'isolation acoustique. Cette configuration constitue un excellent compromis entre la protection mécanique des panneaux (le module préfabriqué obtenu étant particulièrement robuste), l'efficacité d'isolation thermique et phonique, et la rapidité de pose.

Selon une particularité, le plancher présente des jonctions qui s'étendent entièrement au-dessus des caissons pour former la couche décorative. Les jonctions pour former la couche décorative sont décalées latéralement par rapport aux ouvertures respectives des caissons. Chaque caisson présente une unique ouverture pour le passage du panneau PIV. Avantageusement, il est permis de s'affranchir de liaisons avec des organes d'insertion dans le caisson. Cela évite tout risque de perçage de l'enveloppe barrière. Un tel perçage, aussi minime soit-il, provoque la perte du vide à l'intérieur de l'enveloppe, conduisant à une baisse très significative des performances thermiques des panneaux. Il a été constaté en effet que la conductivité thermique peut alors augmenter d'un facteur trois ou quatre, voire au-delà si de la vapeur d'eau pénètre également dans l'enveloppe (de l'ordre de 0,020 W m$^{-1}$ K$^{-1}$ ou plus au lieu de 0,005 à 0,007 W m$^{-1}$ K$^{-1}$ pour un panneau isolant sous vide intact).

Selon une autre particularité, chacune des parois latérales des caissons est réalisée en un matériau ayant une conductivité thermique inférieure ou égale à 0,25 W m$^{-1}$ K$^{-1}$, et de préférence inférieure à 0,1 W m$^{-1}$ K$^{-1}$. Une conductivité faible assure ainsi une solution efficace par rapport à la problématique des ponts thermiques.

Selon une autre particularité, chacun des éléments de revêtement peut comprendre une âme réalisée en un matériau plus dense ou de même densité que les parois latérales du caisson. Ce matériau plus dense, notamment en face supérieure, peut consister en un bois structurel préférentiellement imputrescible (pour l'équipement de pièces humides), un bois dur de masse volumique normale moyenne (au sens de la norme NF B-51-002) supérieure à 650 kg/m$^3$ ou des matériaux synthétiques tels que des plastiques, composites ou stratifiés à base de résines aminoplastes thermodurcissable de masse volumique supérieure à 900 Kg/m3 au sens des normes : NF EN 13329 : Revêtements de sol stratifiés et NF B 54-020 : Revêtements de sol à parement aminoplaste thermodurcissable (ces matériaux de revêtement, connus de l'homme de l'art peuvent être qualifiés pour l'application visée par exemple selon l'homologation UPEC.

Le caisson peut être constitué d'un matériau différent de faible conductivité comme par exemple des matières plastiques synthétiques compactes et rigides telles par exemple des résines (époxy polyester ou phénolique), chlorures de vinyle (PVC) ou éthylène propylène diène monomère (EPDM). La face supérieure de l'élément de revêtement peut le cas échéant comporter un matériau différent du matériau formant l'âme.

Dans divers modes de réalisation du plancher selon l'invention, on peut éventuellement avoir recours en outre à l'une et/ou à l'autre des dispositions suivantes :

- chacun des éléments de revêtement comprend, sur sa face inférieure, une zone annulaire de raccordement qui est fixée hermétiquement au bord supérieur du caisson, de préférence par l'intermédiaire d'une couche de colle, et au moins une face périphérique adjacente à la zone annulaire et qui est adaptée pour s'engager contre une face intérieure de la paroi latérale en vis-à-vis;

- les moyens d'isolation acoustique comprennent une couche formée d'éléments d'isolation acoustique insérés chacun dans le volume intérieur et recouvrant le fond des caissons ;

- les éléments de protection, qui sont séparés les uns des autres, s'étendent chacun dans le volume intérieur d'un des caissons et sont superposés sur la face supérieure d'un des panneaux isolants, de préférence directement superposés sur cette face supérieure sans couche de collage intermédiaire (on prévient ainsi le risque de dégradation de l'enveloppe barrière) ;

- les panneaux isolants ont chacun une épaisseur inférieure ou égale à 35 mm et quatre côtés dont deux côtés opposés parallèles, sachant que les caissons ont une hauteur inférieure ou égale à 50 mm et sont agencés pour former des rangées en bordant lesdits deux côtés parallèles des panneaux dans les rangées (la mise en place est ainsi aisée et le plancher obtenu est peu encombrant en hauteur ; une épaisseur inférieure ou égale à 30 mm peut être obtenue pour le module qui comprend le caisson et l'élément de revêtement) ;

- les éléments de revêtement ont une même épaisseur inférieure à l'épaisseur de la couche de panneaux, et de préférence inférieure à 10 mm, l'épaisseur de chacune des parois latérales des caissons étant inférieure à l'épaisseur des éléments rigides de revêtement.

Il est également proposé selon l'invention un module de plancher préfabriqué, destiné à être assemblé avec au moins un module identique pour former un plancher thermiquement isolant de doublage d'une paroi de sol. Ce module comporte plus particulièrement :

- un élément de revêtement rigide comprenant des organes d'interconnexion pour une connexion bord à bord avec un élément de revêtement adjacent d'un module identique lors d'un assemblage entre modules ;
- une enveloppe rigide externe qui comprend essentiellement un caisson rigide pourvu d'un fond, de parois latérales et d'une ouverture, et une paroi rigide, formée de préférence par l'élément de revêtement rigide, adaptée pour obturer hermétiquement l'ouverture, de sorte que l'enveloppe délimite un volume intérieur, le caisson formant une enveloppe rigide externe du module de plancher lorsque l'ouverture est hermétiquement obturée par ledit élément de revêtement rigide ; et
- un ensemble multicouche qui remplit ledit volume intérieur et qui ne s'étend pas au-delà du bord supérieur, la face inférieure étant en vis-à-vis de, et de préférence en contact avec, l'un au moins des éléments de protection, cet ensemble multicouche comprenant un élément d'isolation acoustique) du côté du fond du caisson au-dessus du plan de base du caisson au-dessus du plan de base du module, au moins un élément de protection mécanique qui inclut un matériau formant une barrière à l'humidité, et un panneau de type PIV qui s'étend entre l'élément d'isolation acoustique et ledit élément de protection mécanique;

dans lequel l'élément de revêtement présente une face supérieure décorative sensiblement plane et une face inférieure fixée à un bord supérieur annulaire du caisson, ladite ouverture étant délimitée par le bord supérieur, la face inférieure étant en vis-à-vis de, et de préférence en contact avec, l'un au moins des éléments de protection, l'élément de revêtement comprenant en outre des organes d'interconnexion pour une connexion bord à bord avec un élément de revêtement adjacent d'un module identique lors d'un assemblage entre modules.

Un avantage de la conception modulaire est qu'il est permis d'assembler rapidement et simultanément la couche d'isolation et la couche décorative du plancher. Un format parallélépipédique (avec des faces latérales verticales) ou dérivé du caisson facilite la mise en place des modules les uns par rapport aux autres lors d'une rénovation et permet de protéger de tous les côtés la partie thermiquement isolante. De plus, l'encombrement du module est réduit et très proche de l'encombrement du ou des panneaux élémentaires de type PIV qu'il contient.

L'ensemble multicouche ne s'étend pas au-delà du bord supérieur annulaire, ce qui permet d'éviter des coincements (entre le bord annulaire et la paroi rigide d'obturation, pendant la conception du module) qui peuvent être néfastes à certaines fonctions (dégradation de la protection contre l'humidité).

Il est également proposé, selon l'invention un kit d'assemblage pour former le plancher selon l'invention, ce kit comprenant une pluralité de modules du type susmentionné.

On cumule donc, en utilisant ce kit d'assemblage, les avantages de fabrication au préalable de tout ou partie des modules en usine (ce qui facilite le montage sur chantier du plancher), de réduction de la durée du chantier, de précision sur les dimensions (typiquement de l'ordre du millimètre) tout en garantissant une performance thermique optimale en limitant les inconvénients liés à la mise en œuvre de panneaux élémentaires PIV de fabrication standard.

Par ailleurs, l'invention a également pour objet un procédé de fabrication d'un module de plancher, par utilisation d'un caisson rigide pourvu d'un fond qui définit un plan de base du module, de parois latérales et d'une ouverture opposée au fond, le procédé comprenant les étapes successives suivantes :

- former et/ou placer un élément d'isolation acoustique du côté du fond du caisson, au-dessus du plan de base du module ;
- remplir le caisson, par insertion au travers de l'ouverture d'au moins un panneau de type PIV ;
- obturer hermétiquement l'ouverture par une paroi rigide formée de préférence par au moins un élément de revêtement rigide, et placer cet élément de revêtement sur le caisson et parallèlement au fond dans la position d'obturation, de façon à ce qu'il présente une face supérieure décorative sensiblement plane parallèle au plan de base et des organes d'interconnexion qui s'étendent au-dessus du caisson, lesquels permettent une connexion bord à bord avec un élément de revêtement adjacent d'un module identique lors d'un assemblage entre modules ;

le procédé comprenant en outre l'étape consistant essentiellement à placer au moins un élément de protection mécanique, qui inclut au moins un matériau formant une barrière à l'humidité, entre ledit panneau et l'élément de revêtement.

Un élément d'isolation acoustique, distinct de l'élément de protection mécanique, est formé et/ou placé du côté du fond du caisson, au-dessus du plan de base du module et avant l'insertion du panneau, ce grâce à quoi le volume intérieur du caisson est rempli par un ensemble multicouche qui comprend :

- l'élément d'isolation acoustique ;
- ledit panneau entre ledit élément d'isolation acoustique et ledit élément de protection mécanique ;
- ledit élément de protection mécanique ;

l'ensemble multicouche ne s'étendant pas au-delà d'un bord supérieur annulaire du caisson qui délimite ladite ouverture.

Le procédé permet avantageusement de former des modules de plancher dont l'assemblage bord à bord (assemblage au niveau de la couche supérieure qui est facilement accessible) permet de constituer rapidement une couche d'isolation thermique à base de panneaux PIV. Le caisson facilite l'assemblage *in situ* et on protège le panneau PIV au stade de la conception du module de plancher. L'obturation permet de fermer de manière étanche le volume intérieur qui contient le ou les panneaux de type PIV et d'autres couches, de façon à supprimer toute circulation d'air le long des parois du panneau.

D'autres caractéristiques et avantages de l'invention apparaîtront au cours de la description suivante de plusieurs de ses modes de réalisation, donnés à titre d'exemples non limitatifs, en regard des dessins joints dans lesquels :

- la figure 1 est une vue en perspective représentant une forme de réalisation d'un module de plancher peu épais ayant une fonction d'isolation thermique ;
- la figure 2 est une vue en coupe montrant un exemple de plancher thermiquement isolant 1 obtenu par assemblage de modules de plancher ;
- la figure 3 montre une variante de réalisation d'un module de plancher intégrant plusieurs panneaux de type PIV ;
- la figure 4 montre un détail d'un module de plancher conforme à l'invention ;
- la figure 5 illustre une variante de réalisation d'un plancher avec des caissons ayant un format dérivé du format parallélépipédique.

Sur les différentes figures, les mêmes références désignent des éléments identiques ou similaires. Les dimensions dans le sens vertical (sens de l'épaisseur) ont été volontairement exagérées dans certaines figures afin d'améliorer la visibilité des différentes couches.

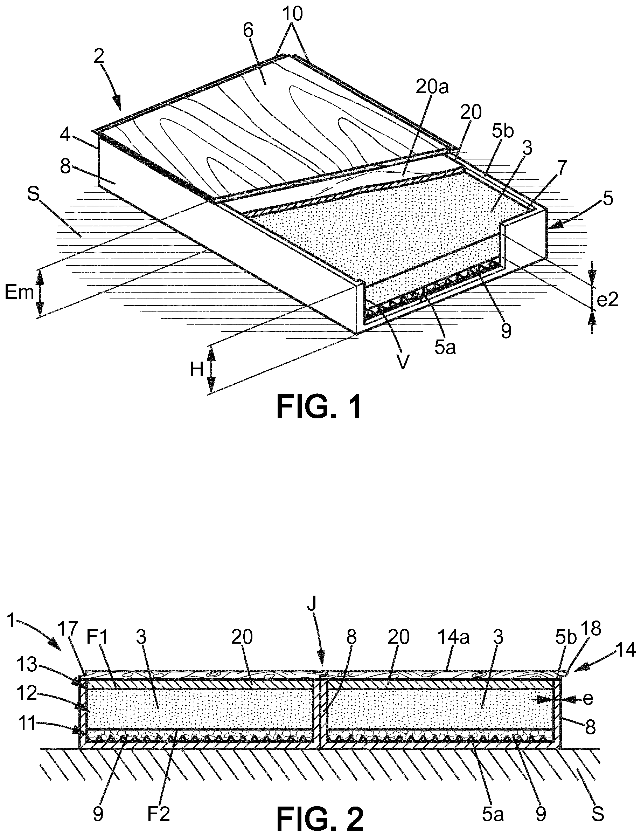

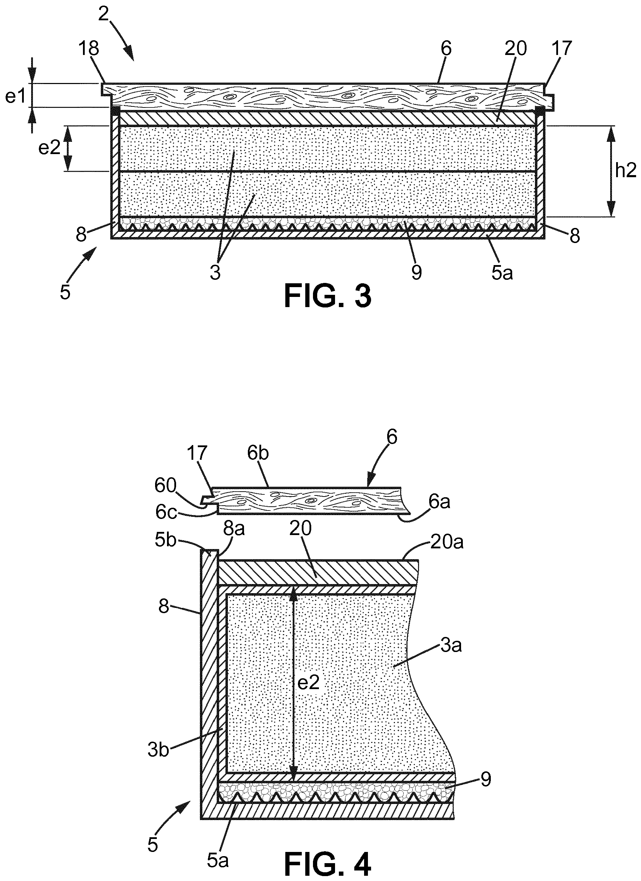

En référence aux figures 1-2 et 4, le plancher thermiquement isolant 1 est obtenu par assemblage de modules de plancher 2 qui peuvent être entièrement préfabriqués avant la pose à titre de rénovation de plancher ou pose similaire sur un substrat existant S. Le module de plancher 2 comprend un panneau 3 de type PIV qui est enfermé et protégé à l'intérieur d'une enveloppe externe 4 rigide. Comme visible sur la figure 4, chacun des panneaux 3 comprend un matériau poreux 3a (âme isolante) résistant à la compression et une enveloppe barrière 3b étanche aux gaz, fermée sous vide, qui renferme le matériau poreux 3a. L'enveloppe barrière 3b est souple et intègre généralement un film thermo-soudable. La soudure est de préférence réalisée en périphérie latérale, dans un plan intermédiaire entre la face supérieure F1 et la face inférieure F2 du panneau 3.

Dans l'exemple non limitatif illustré, l'enveloppe externe 4 comprend essentiellement un caisson rigide 5 et un élément de revêtement 6 rigide, ici de forme plane, qui obture hermétiquement l'ouverture 7 du caisson 5. Le volume intérieur V délimité par cette enveloppe externe 4 est ici sensiblement parallélépipédique pour permettre de loger de manière ajustée un panneau 3 en forme de plaque. Dans les formes de réalisation montrées sur les figures 1-2 et 4, la hauteur H du caisson 5 n'excède pas le double de l'épaisseur e2 (formée ici essentiellement par l'épaisseur du matériau poreux 3a) du panneau 3. De préférence le ratio e2/H est compris entre 1:2 et 3:4.

Le caisson 5 est ici pourvu d'un fond 5a sensiblement plan et de parois latérales 8. Lorsque le plancher 1 est installé sur un sol horizontal, on comprend que ces parois latérales 8 s'étendent verticalement, tandis que le plan de base défini par le fond 5a est horizontal. L'ouverture 7 définit un accès supérieur (accès ici unique) au volume intérieur V. Cette ouverture 7 est ici délimitée par un bord supérieur annulaire 5b du caisson 5 qui présente quatre côtés. Le panneau 3 de type PIV est introduit au travers de l'ouverture 7 qui est plus étendue que n'importe laquelle des faces formées par les parois latérales 8. Le fait d'introduire le panneau 3 par l'une des deux faces principales est avantageux pour minimiser les frottements contre les faces inférieure et supérieure du panneau 3. Du fait de la faible hauteur H du caisson 5, qui est par exemple inférieure ou égale à 50 mm, l'introduction du panneau 3 peut être réalisée sans effort de flexion.

De préférence, le module 2 inclut un seul élément intermédiaire d'espacement (cet élément intermédiaire inférieur étant typiquement moins rigide que le fond 5a) entre le fond 5a du caisson 5 et le panneau 3. Il s'agit par exemple d'un élément d'isolation acoustique 9 qui recouvre la surface intérieure du fond 5a (par exemple en ayant le même format que la surface intérieure du fond 5a). Dans une variante (en supplément ou éventuellement en remplacement des éléments d'isolation acoustique 9), on peut aussi utiliser une couche d'isolation acoustique 13 placée entre le substrat S et la base du caisson 5. A des fins d'isolation phonique, il peut aussi être prévu des perçages ou des évidements dans la paroi formant le fond 5a du caisson 5. On comprend que la pose est simplifiée en utilisant des moyens d'isolation acoustique qui sont intégrés dans le volume défini par les parois latérales 8. Il est de plus préférable que les moyens d'isolation acoustique incluent un matériau amortisseur de vibrations, par exemple sous la forme d'un fin panneau (en fibres de bois) ou d'une fine dalle (dalle de liège). Des matériaux à base de fibres minérales et/ou de fibres de synthèse peuvent également être utilisés. Ces exemples de matériau sont bien entendu non limitatifs.

De façon similaire, il peut être avantageux d'utiliser un seul élément intermédiaire d'espacement (moins rigide que le fond 5a et typiquement moins rigide que l'élément de revêtement 6) entre le panneau 3 et l'élément de revêtement 6 qui forme la couche supérieure rigide du module 2. Cet élément intermédiaire d'espacement supérieur forme une barrière aux liquides et protège le panneau 3.

Comme bien visible sur les figures 1 et 2, on peut noter que le caisson 5 est dépourvu d'organes de fixation et peut être dépourvu de reliefs sur ses faces latérales 8. On comprend qu'on peut doubler ainsi le substrat S, sans la moindre fixation sur ce dernier, ni fixation transversale au travers des faces latérales 8.

En référence à la figure 2, le plancher 1 formé par l'assemblage des modules 2 comprend ainsi plusieurs couches :

- une couche d'isolation acoustique 11 qui est en contact avec le fond 5a des caissons 5 ;
- une couche 12 de panneaux 3 de type PIV qui est intercalée entre la couche d'isolation acoustique 11 et une couche de protection à l'humidité 13, cette couche étant appelée dans ce qui suit couche d'isolation thermique 12 ;
- la couche de protection à l'humidité 13, placée au dessus de la face supérieure F1, qui forme une barrière aux liquides et permet d'amortir les efforts de flexion ou de poinçonnement subis par les éléments de revêtement 6 ; et
- une couche externe décorative 14, qui s'étend au-dessus de la couche de protection 13 et permet ici de fermer le caisson 5.

Bien entendu, au moins une couche additionnelle peut être prévue, par exemple pour obtenir un effet spécifique d'absorption de liquide au dessus d'une couche de protection mécanique. On comprend que les parois 5a et 8 du caisson 5 forment une ossature qui rigidifie le plancher 1 et assurent, en combinaison avec les éléments de protection 20, un maintien de l'espacement des éléments de revêtement 6 rigides de la couche décorative 5 par rapport à la couche d'isolation thermique 12. Dans une variante de réalisation, on peut prévoir que les éléments de protection 20 placés sous l'élément de revêtement 6 comprennent une ou plusieurs couches protectrices superposées, l'une de ces couches protectrices pouvant être rigide et/ou servir à obturer l'ouverture 7. On peut ainsi prévoir une paroi rigide supérieure, de faible épaisseur, qui ferme le caisson 5 en recouvrant le bord 5b. Cette paroi rigide, qui s'étend sous l'élément de revêtement 6, comprend par exemple la même matière que les faces latérales 8 et présente typiquement la même épaisseur e. Ce type de paroi additionnelle peut permettre d'augmenter la zone de solidarisation et de support avec l'élément de revêtement 6. On comprend que, même dans ce type de variante, la couche de protection 13 peut rester mince, par exemple en restant au moins deux ou trois fois plus mince que la couche d'isolation thermique 12 (qui elle-même a une épaisseur h2 qui est de préférence dans la gamme 10-40 mm).

En référence aux figures 1-3, les éléments de revêtement 6 sont pourvus d'organes d'interconnexion 10 pour la connexion bord à bord avec un élément de revêtement 6 adjacent d'un module de plancher 2 identique lors de l'assemblage du plancher 1. Les organes d'interconnexion 10 font partie de l'âme de l'élément de revêtement 6 lorsque celui-ci présente plusieurs couches (cas notamment d'un élément de revêtement de type stratifié).

Les organes d'interconnexion 10 peuvent comporter une rainure 17 et une languette 18 ou inclure des moyens d'emboîtement. Lorsque les éléments de revêtement 6 ont un format externe rectangulaire, il peut être prévu des organes d'interconnexion sur chacun des quatre côtés correspondants. On comprend que les éléments de revêtement 6 peuvent être de type clipsables, par exemple à l'aide de languettes 18 qui présentent une certaine capacité de déformation. Les éléments de revêtement 6 peuvent inclure un matériau unique de type résine ou se présenter sous la forme d'éléments de parquet bois (par exemple chêne massif ou autre bois adapté) ou stratifié. On comprend que les éléments de revêtement ainsi constitués sont rigides et non déformables localement.

Les jonctions J entre éléments de revêtement 6 s'étendent le long d'arêtes externes respectives du bord supérieur 5a du caisson 5, entièrement au-dessus du caisson 5 pour ne pas interférer avec l'épaisseur des parois latérales 8. Chacun des éléments de revêtement 6 présente, de préférence, une épaisseur déterminée e1 telle que l'encombrement en hauteur de ces éléments de revêtement 6 est inférieur à celui des caissons 5. Ainsi, avec des éléments de revêtement 6 sensiblement plans, robustes et sans cavité (comme bien visible sur chacune des figures 1-5), on obtient un très bon compromis entre l'encombrement général en hauteur, la résistance (contraintes d'un plancher) et la simplicité/finesse des parois latérales 8 qui enveloppent latéralement l'ensemble des couches internes au caisson 5. Les parois latérales 8, de faible épaisseur e, peuvent ainsi présenter un aspect continu qui limite les déperditions thermiques.

On peut voir que les éléments de revêtement 6 ont un périmètre sensiblement identique au périmètre des caissons 5 qui est défini à proximité du bord supérieur 5b. Les jonctions J sont décalées latéralement (vers l'extérieur) par rapport aux arêtes internes du bord supérieur 5a. Ce décalage par rapport à l'ouverture 7 des caissons 5 permet de s'assurer que le contact annulaire entre le dessus du caisson 5 et la face intérieure 6a de l'élément de revêtement 6 est maintenu étanche, sans sollicitation excessive au moment de l'étape d'assemblage entres modules 2.

Comme illustré sur la figure 2, les éléments de revêtement 6 présentent une face supérieure décorative 6b sensiblement plane et forment la couche externe décorative 14. Cette couche 14 présente un aspect continu (avec une face supérieure décorative 14a typiquement dépourvue de relief) grâce une connexion bord à bord des éléments de revêtement 6. Ainsi, les éléments de revêtement 6 sont agencés de façon contiguë dans une même rangée du plancher 1.

Dans certaines formes de réalisation, on peut prévoir que la couche 13 de protection à l'humidité présente aussi une continuité de matière, par exemple par utilisation d'éléments de protection 20 ayant des bords ou extrémités amincies intercalées entre le bord supérieur 5b et la face inférieure 6a de l'élément de revêtement 6 correspondant. Plus généralement, un faible espacement entre le bord supérieur 5b et la face inférieure 6a peut être prévu, dès lors que la reprise d'efforts (force verticales) peut effectivement être obtenue par les parois latérales 8 du caisson 5. Avec en outre l'effet d'absorption permis par l'élément de protection 20, on empêche ainsi l'altération de l'enveloppe barrière 3b même en cas de poinçonnement sur l'élément de revêtement 6. Il est préférable de placer l'élément de protection 20 directement sur la face supérieure F1 du panneau 3, sans couche de colle. On comprend aussi que la face inférieure 6a peut être en contact direct avec un élément de protection 20 pour minimiser l'espacement par rapport au panneau 3. Dans l'exemple représenté, le format de cet élément de protection 20 est tel que ses quatre bords externes sont en contact avec chacune des parois latérales 8. On supprime ainsi tout passage d'accès à la face supérieure F1. De plus, on forme ainsi une couche supplémentaire de protection acoustique.

L'élément de protection 20 est par exemple en polymère thermoplastique, thermodurcissant ou en matériau composite ou silicone ou mousse élastomère, formant une barrière à l'humidité. Une combinaison de plusieurs couches peut être utilisée pour former l'élément de protection 20, avec éventuellement une ou des couches barrières minérales ou métalliques. La matière de l'élément de protection, qui assure une protection mécanique et une isolation à l'humidité a typiquement un facteur de résistance à la vapeur d'eau μ de l'ordre de 50 000 à 500 000. Ce facteur de résistance à la diffusion de la vapeur d'eau (noté μ) est défini notamment dans le fascicule N° 2/5 de la réglementation thermique Française RT 2000 : il s'agit du rapport sans unité entre la perméabilité de l'air - égale à $1,9.10^{-10}$ kg/(m.s.Pa) - sur celle du matériau considéré. Ce facteur est également décrit dans la norme NF EN 12524 et EN ISO 93 46. Une feuille en une matière résiliente peut être préférée pour former l'élément de protection 20, typiquement à la condition que cette matière soit étanche à l'eau liquide, de forte résistance à la diffusion de vapeur d'eau, et mécaniquement protectrice. Une épaisseur d'environ 0,5 à 3 mm peut être suffisante pour l'élément de protection 20.

En référence aux figures 1-3 et 5, les parois latérales 8 créent des discontinuités dans les couches 11, 12 et 13. En effet, contrairement à la couche décorative 14 qui présente une continuité (et en particulier une continuité de matière lorsque les organes d'interconnexion 10 sont intégralement formés sur des bords latéraux des éléments de revêtement 6, comme visible sur la figure 2), il est prévu dans cet exemple que les autres couches 11, 12 et 13 intègrent une section des parois latérales 8 qui sépare les éléments constitutifs de ces couches. Dans la couche de protection 13, on peut voir ainsi que les éléments de protection 20 sont entièrement placés dans le volume intérieur V. Ils présentent chacun une face supérieure 20a qui affleure ici au niveau du bord supérieur 5b du caisson 5 et sont étroitement encadrés pas l'extrémité supérieure du caisson 5.

Dans la couche d'isolation acoustique 11, les éléments d'isolation acoustique 9 peuvent être répartis de manière plus ou moins espacés, et éventuellement coopérer avec ou recouvrir des cavités ou perçages formés dans le fond 5a. On comprend que ces éléments d'isolation acoustique 9 s'étendent entre les parois latérales 8 (éventuellement en interférant avec le fond). La mise en place des éléments d'isolation acoustique 9 est réalisée lors de la fabrication du module de plancher 2, de préférence juste avant l'insertion du panneau 3 de type PIV. Autrement dit, l'utilisateur qui pose le plancher 1 en assemblant les modules 2 n'a pas à se soucier d'ajouter une isolation phonique et de préférence n'a pas possibilité d'accéder aux panneaux 3 de la couche d'isolation thermique 12.

A nouveau en référence à la figure 2, les parois latérales 8 du caisson 5 forment des moyens d'appui qui reprennent les efforts supporté par les éléments de revêtement 6. Au niveau de la zone de contact entre deux modules 2, deux parois latérales 8 sont accolées et serrées avec un contact sans interstices. Il n'y donc aucun passage entre les rangées de panneaux 3 et on évite ainsi que de l'air s'écoule au travers de la couche d'isolation thermique 12 formée par les panneaux 3 de type PIV.

Afin de minimiser la distance entre deux panneaux 3 à l'intérieur de la couche d'isolation 12, il est avantageux de limiter l'épaisseur e des parois latérales 8. Par exemple, les parois latérales 8 n'excèdent typiquement pas une épaisseur e de 5 mm (une épaisseur d'1 ou 2 mm étant préférée). La matière constitutive des parois latérales 8 est peu conductrice de la chaleur, avec par exemple une conductivité thermique préférée inférieure à $0,1$ W $m^{-1}$ $K^{-1}$. Ceci permet de minimiser la conduction de chaleur au travers de la couche de panneaux 3. On peut noter que l'épaisseur e est de préférence inférieure à l'épaisseur e1 des éléments de revêtement 6. A titre d'exemple non limitatif, l'épaisseur e1 de l'élément de revêtement 6 est inférieure ou égale à 10 mm. L'épaisseur e2 des panneaux 3 de type PIV peut être supérieure. La couche d'isolation thermique 12 peut être ainsi deux fois plus épaisse que l'élément de revêtement 6. A titre d'exemple, la valeur de l'épaisseur e2 peut être comprise entre 20 mm et 35 ou 40 mm. Mais cela n'exclut pas d'autres valeurs (légèrement inférieures ou légèrement supérieures), en fonction des besoins en performances d'isolation thermique.

Dans la variante de réalisation montrée sur la figure 3, la couche d'isolation thermique 12 peut comporter plusieurs sous-couches de panneaux 3. Dans ce cas, on peut avoir un ratio h2/H compris entre 1 :2 et 5 :6, de préférence entre 2 :3 et 3 :4, sachant que h2 désigne la hauteur de la couche d'isolation thermique 12. Un ratio h2/H supérieur à 2 :3 est préféré pour l'ensemble des exemples représentés.

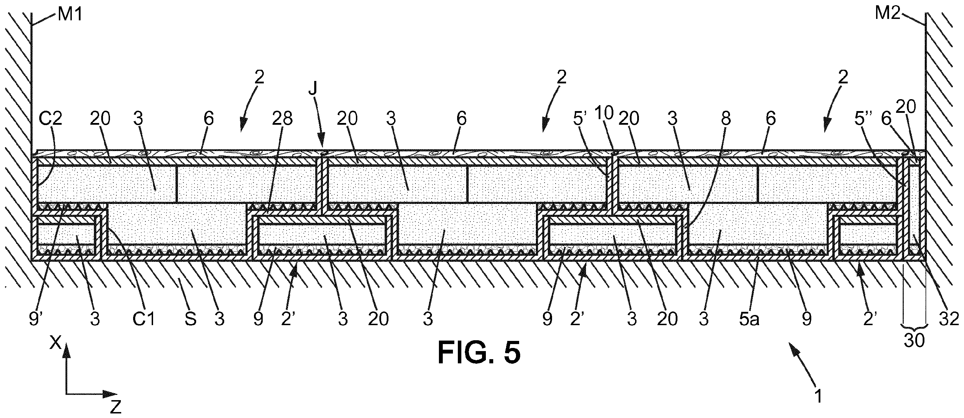

Dans d'autres formes de réalisation, comme illustré sur la figure 5, on peut prévoir d'assembler des modules 2 dont le caisson 5' n'a pas une forme parallélépipédique. Le caisson 5' est dimensionné pour permettre une superposition de deux couches de panneaux 3 avec un décalage de la jonction entre deux panneaux voisins. Cela permet de minimiser les ponts thermiques au niveau de cette jonction. Dans cet exemple le caisson 5' délimite un compartiment inférieur C1 et un compartiment supérieur C2 (du côté de l'ouverture 7) qui est plus large dans une direction. Les faces latérales décalées vers l'intérieur qui délimitent le compartiment inférieur C1 s'étendent (depuis le fond 5a selon la direction X ici verticale) jusqu'à une zone de débouché du compartiment inférieur C1 dans le compartiment supérieur C2. Cette configuration permet de recevoir dans le volume intérieur V des panneaux 3 sur deux niveaux (inférieur et supérieur) : par exemple deux panneaux 3 dans le compartiment supérieur C2, au-dessus d'un panneau 3 placé dans le compartiment inférieur C1. Dans ce cas, les moyens d'isolation acoustique peuvent comporter un premier élément 9 posé sur le fond 5a et en contact avec le panneau 3 du niveau inférieur, et deux deuxièmes éléments 9' posés chacun sur un épaulement interne 28 du caisson 5' et en contact respectif avec l'un des panneaux 3 du niveau supérieur.

On comprend dans ce cas que la conception de l'élément de revêtement 6 et de l'élément de protection 20 peut rester inchangée. Des modules de plancher complémentaires 2' (ici de format parallélépipédique) sont placés entre les modules 2 adjacents interconnectés, sous les épaulements 28. Ils complètent les espaces entre les compartiments inférieurs C1 de deux modules 2 adjacents. Hormis l'absence de l'élément de revêtement 6, ces modules complémentaires 2' peuvent être identiques aux modules montrés dans les figures 1-2 ou optionnellement différer en outre par l'absence de l'élément de protection 20 ou son remplacement par une couche protectrice de nature différente. Dans l'exemple illustré sur la figure 5, le format du panneau 3 inséré dans le module complémentaire 2' est plus petit que celui du panneau 3 adjacent en contact avec le fond 5a du module 2. Les caissons 5 et 5' sont accolés bord à bord du fait du dimensionnement ajusté des modules complémentaires 2' moins larges. Dans l'état installé, un élément de protection 20 qui forme la couche supérieure horizontale du module complémentaire 2' peut être accolé avec un contact direct contre la portion de paroi horizontale formant l'épaulement 28.

En vue de minimiser l'épaisseur du plancher 1 montré sur la figure 5, on peut bien entendu réduire l'épaisseur de la couche d'isolation thermique 12, par exemple en utilisant des panneaux 3 plus minces pour constituer le niveau inférieur (ou alternativement le niveau supérieur).

En fonction du format du caisson 5, on comprend que la pose du plancher 1 peut nécessiter si besoin des modules d'adaptation 30. Par exemple pour couvrir entièrement l'espace délimité entre deux murs distants M1 et M2, et sachant que les modules 2, 2' embarquant des panneaux 3 de type PIV ne peuvent pas être découpés, on peut compléter une rangée en plaçant le long du deuxième mur M2 un module d'adaptation 30 qui résulte typiquement d'une découpe. De tels modules d'adaptation 30 ont bien entendu des dimensions adaptées pour compléter la rangée et disposent du même élément de revêtement 6 décoratif et du même système d'interconnexion permettant l'assemblage. Mais ils sont munis d'un isolant performant rigide 32, de préférence en polyuréthanne ou matériau isolant à base d'aérogel de silice, placé dans le caisson 5" associé ou directement collé sur l'élément de revêtement 6. Ceci autorise la coupe et le perçage à façon pour permettre l'adaptation aux dimensions de la surface de la pièce à revêtir sur son pourtour. Lorsque le module d'adaptation 30 inclut un caisson 5", ce dernier peut typiquement présenter la même hauteur H que les caissons 5.

D'autres matières peuvent être utilisées dans un tel module d'adaptation 30, par exemple une mousse thermodurcissable différente du polyuréthanne ou encore un bloc comprenant des fibres végétales et/ou minérales. Dans la mesure où ces modules 30 sont destinés à être découpés pour permettre l'adaptation périphérique aux dimensions de la pièce, la différence de performance d'isolation thermique liée à la nature de l'isolant n'induira que des pertes thermiques minimes par rapport à la performance d'isolation globale obtenue sur la totalité de la surface de la pièce.

Si des perçages sont prévus pour le passage de fluides ou de câbles, sous le niveau supérieur du plancher 1, alors on peut mettre à profit les modules d'adaptation 30 qui sont présents à la marge pour procéder à de tels perçages.

Un module de plancher 2 conforme à l'invention peut, de préférence, présenter un critère qualitatif qui combine les notions d'encombrement en hauteur (adaptation à la problématique de rénovation), de ponts thermiques et de performance de l'élément isolant placé dans le caisson 5 ou 5'. Un critère qualitatif du module 2, qui correspond au ratio défini ci-dessous (ratio exprimé en cm$^{-2}$), satisfait ainsi la relation suivante :

$$K2/(Em.e.K1) \geq 2$$

où

K1 est la conductivité thermique de l'élément isolant placé dans le caisson 5,
K2 est une constante de conductivité prise égale à 0,025 W m$^{-1}$ K$^{-1}$ (il s'agit de la valeur correspondant à une mousse de polyuréthane),
Em est l'épaisseur du module 2, exprimée ici en cm,

e est l'épaisseur de la paroi latérale 8, exprimée ici en cm.

Concrètement, ce critère peut être choisi inférieur à 100 ou inférieur à 50 cm$^{-2}$. Une valeur plus élevée apparaît plus difficile à atteindre pour des applications courantes et de grande consommation (le module 2 ayant une épaisseur minimale de l'ordre de 1 cm), notamment en raison du coût des matériaux ayant une valeur de K1 inférieure à 0,007 W m$^{-1}$ K$^{-1}$ et des contraintes pour assurer la tenue mécanique du plancher 1 formé par les modules 2 (on comprend que l'épaisseur e dépasse typiquement 0,05 cm). Une valeur de l'ordre de 1 cm$^{-2}$, qui peut être rencontrée avec les paramètres suivants K1 = K2, Em = 7 cm et e = 0,14 cm, n'est pas considérée satisfaisante du fait que l'encombrement correspondant en hauteur (qui apparaît nécessaire pour conserver une performance d'isolation thermique proche de ce qui est obtenu avec des panneaux 3 de type PIV) serait clairement rédhibitoire pour de la rénovation. De plus, l'augmentation inhérente de la hauteur des parois latérales 8 tend à réduire significativement la bonne tenue mécanique du module 2 lorsque l'épaisseur e est seulement de l'ordre de 1 ou 2 mm. Une valeur supérieure ou égale à 2, et de préférence supérieure ou égale à 5 cm$^{-2}$, est donc bien plus avantageuse. Dans les formes de réalisation illustrées, on comprend que les épaisseurs e et Em peuvent être par exemple d'environ 0,15 cm et 2,5 cm, respectivement, la valeur du critère qualitatif étant alors typiquement supérieure ou égale à 8 ou 9 grâce à l'utilisation des panneaux 3 de type PIV (avec K2/K1 $\geq$ 3,5).

Le caractère préfabriqué du module de plancher 2 évite toute dégradation du film ou enveloppe barrière 3b (voir figure 4) du panneau 3. Dans une variante de réalisation, le caisson 5 peut être préfabriqué et rempli seulement avec l'élément d'isolation acoustique 9 et le panneau 3 de type PIV. Dans ce cas, l'élément de protection 20 est placé sur la face supérieure F1 du panneau 3 seulement au moment de l'assemblage du plancher 1 sur place, par exemple juste avant l'obturation de l'ouverture 7 par l'élément de revêtement 6 ou au moment d'une étape de collage de l'élément de revêtement 6 pour réaliser l'obturation (obturation hermétique).

Les dimensions du volume intérieur du caisson 5 sont prédéterminées en fonction de la taille de panneau(x) 3 qu'on souhaite utiliser. Lorsque ces panneaux 3 sont parallélépipédiques, des dimensions préférées sont une largeur supérieure ou égale à 10 cm (une largeur inférieure pouvant être pénalisante du fait des éventuels ponts thermiques) et une longueur qui dépasse 60 cm sans atteindre un seuil supérieur à 220 cm ou même 200 cm (ce qui permet de faciliter le transport dans des escaliers par exemple). Les parois latérales 8 et le fond 5a du caisson 5 peuvent être réalisés en une même matière rigide choisie parmi les bois structuraux (aux caractéristiques mécaniques par exemple équivalentes à celles de bois massifs tels que le chêne), des matériaux composites, des matières plastiques synthétiques rigides compactes telles par exemple des résines (époxy polyester ou phénolique), chlorures de vinyle (PVC) ou éthylène propylène diène monomère (EPDM), des plastiques rigides avec ou sans des fibres de verre, éventuellement avec des particules métalliques (par exemple polyamide PA 66 chargé à 25% de fibres de verre).

La fixation de l'élément de revêtement 6 contre le caisson 5 peut le cas échéant utiliser deux surfaces distinctes de l'élément de revêtement 6. Dans l'exemple non limitatif de la figure 4, l'élément de revêtement 6 peut comporter sur sa face inférieure 6a une zone annulaire 60 de raccordement qui est fixée hermétiquement au bord supérieur 5b du caisson 5. Cette fixation est réalisée de préférence par l'intermédiaire d'une couche de colle. Une autre surface est utilisée pour le guidage et la fixation de l'élément de revêtement 6. Cette surface externe est formée par une face périphérique 6c adjacente à la zone annulaire 60. On peut voir que cette face périphérique 6c est ici adaptée pour s'engager contre la face intérieure 8a de la paroi latérale 8 du caisson 5. Plus généralement, toute autre forme adaptée de connexion, de préférence étanche, peut être utilisé pour obturer l'ouverture 7.

Un exemple de méthode de montage de la couche de panneaux 3 par utilisation des modules de plancher 2 va à présent être brièvement décrit en référence aux figures 1-2 et 4-5.

Le caisson 5 est préalablement pourvu des moyens d'isolation (par exemple en plaçant une feuille formant l'élément 9 d'isolation acoustique pour recouvrir entièrement le fond 5a) et rempli avec le panneau 3 de type PIV. On considère ici que l'élément de revêtement 6 est inamovible par rapport au caisson 5, du fait de la fixation. Deux modules 2 de mêmes dimensions sont placés sur le même substrat S et sensiblement alignés dans une rangée. Deux faces latérales 8 de même format sont accolées l'une contre l'autre et les modules 2 peuvent alors être connectés au niveau de la couche décorative 14, comme dans l'exemple de la figure 2. Pour cela, une languette 18 doit faire face à une rainure 17 et est engagée dans cette dernière.

Il est préférable de commencer depuis un mur M1, par exemple en formant une rangée le long de ce mur M1, de poursuivre vers le mur M2 opposé (suivant la direction Z visible sur la figure 5) et ajuster l'éventuel espacement final entre un module 2 et le mur M2 par insertion d'un module d'adaptation 30, comme illustré dans le cas de la figure 5. Hormis la phase optionnelle de découpe du module d'adaptation 30, on comprend que la pose du plancher 1 ne requiert aucun outil et peut être très rapide. Le module d'adaptation 30 peut le cas échéant être dépourvu de caisson sous l'élément de revêtement 6 si l'isolant 32 qui le compose est suffisamment rigide.

La jonction entre deux rangées voisines peut être réalisée par utilisation d'éléments de fixation latéraux formés sur les éléments de revêtement 6. On comprend que de tels éléments de fixation latéraux, qui peuvent être d'un genre connu en soi (par exemple languette + rainure), font partie des organes d'interconnexion 10. Dans l'état interconnecté, les deux rangées voisines sont fermement accolées l'une à l'autre, sans espace entre les parois latérales 8. Cet accolement (qui double l'épaisseur e d'une seule paroi latérale 8) permet d'augmenter la rigidité et la résistante des caissons 5 à des charges verticales (notamment résistance à la flexion accrue).

L'assemblage peut être réalisé sans collage avec une couche décorative d'aspect conventionnel et esthétique. La couche de panneaux 3 est protégée des agressions mécaniques et hydriques et les caissons 5 et/ou les éléments de protection 20 assurent les reprises d'effort mécaniques notamment de poinçonnement ou liés à la marche ou la présence de meubles.

Il a été constaté qu'un écartement trop important entre deux panneaux 3 adjacents de type PIV et une conductivité trop élevée du matériau intercalaire étaient deux causes majeures de dégradation de la performance d'isolation globale. C'est pourquoi il s'avère important d'utiliser un matériau ayant une conductivité thermique faible inférieure à 0,6 W m$^{-1}$ K$^{-1}$, en particulier au niveau des parois latérales 8 qui ont typiquement une épaisseur de l'ordre de 1-2 mm. Une épaisseur de l'ordre de 3-4 mm reste intéressante à condition d'utiliser un matériau pour ces parois latérales 8 qui présente une conductivité thermique environ deux fois plus faible, de préférence inférieure ou égale à 0,25 W m$^{-1}$ K$^{-1}$, plus préférentiellement inférieure à 0,1 W m$^{-1}$ K$^{-1}$ ou même 0,065 W m$^{-1}$ K$^{-1}$. Le matériau est dans ce cas considéré comme thermiquement isolant.

Un avantage d'utiliser des parois latérales 8 minces est que l'écartement entre les deux tranches de panneaux 3 adjacents reste bien inférieur à 5 mm, et de préférence inférieur à 4 mm. Or il a été constaté une dégradation assez brutale de la performance de la couche de panneaux 3 lorsque cet écart atteint ou dépasse 4 mm et que le matériau intercalaire n'est pas thermiquement isolant. Dans ce cas, un transfert de chaleur par conduction se réalise de façon importante au niveau des jonctions entre les rangées et le bénéfice du super isolant dans les panneaux 3 est très dégradé, sauf à utiliser dans les jonctions une matière ayant une conductivité thermique s'approchant au mieux de celle des panneaux 3 de type PIV. Pour des raisons de coût des caissons 5 et pour la bonne tenue mécanique du plancher 1, on comprend qu'il est préférable que l'écart entre les panneaux 3 (de couches adjacentes) soit réduit à moins de 3 mm ou éventuellement moins de 4 mm.

Un des atouts du plancher thermiquement isolant 1 est de minimiser le temps de montage et d'éviter toute altération accidentelle des performances d'isolation de panneaux 3 de type PIV grâce à l'utilisation de modules 2 typiquement préfabriqués (le remplissage du caisson 5 étant en outre aisé du fait que l'on peut prédécouper les composants 9 et 20 au format de la cavité interne du caisson 5). Un ajustement efficace des diverses couches est réalisé sans difficulté et l'interconnexion (située dans la couche décorative 14) n'interfère ni avec la couche d'isolation thermique 12 ni avec la couche de protection à l'humidité 13. La mise en place peut être flottante, posée directement sur le substrat S ou collée. Il est plus simple et avantageux, en particulier dans une application de rénovation, d'utiliser de tels modules 2 obtenus par une filière sèche (pas d'utilisation de béton par exemple).

La solution avec un kit d'assemblage comprenant les modules 2 est particulièrement bien adaptée pour la rénovation de bâtiment, en particulier lorsque les modules 2 présentent une épaisseur de l'ordre de 30 mm ou moins (cas par exemple avec des panneaux 3 de type PIV ayant une épaisseur e2 inférieure ou égale à 20 mm et des caissons 5 présentant une hauteur H strictement inférieure à 30 mm). L'efficacité d'isolation par un tel plancher 1 est en outre très bonne, avec une résistante thermique globale estimée supérieure ou égale à 2 m$^2$ K W$^{-1}$. Cette efficacité d'isolation thermique ne peut pas être obtenue avec des matériaux isolants conventionnels. On peut noter cependant qu'avec un panneau formé à base d'aérogel de silice (dont la conductivité thermique est de l'ordre de 0,015 W m$^{-1}$ K$^{-1}$), il serait typiquement nécessaire de doubler l'épaisseur du plancher 1, ou tout du moins doubler la hauteur H du caisson associé. Dans un caisson 5 ou 5', des variantes de remplissage peuvent être réalisées avec un panneau ou une plaque à base d'aérogel de silice ou autre isolant similaire (de densité très faible du fait de la microporosité), de conductivité très inférieure à 0,025 W m$^{-1}$ K$^{-1}$. De préférence, un tel remplissage est réalisé en complément d'une couche formée par des panneaux 3 de type PIV.

On peut noter qu'aucun outillage particulier n'est nécessaire pour la pose de ces modules 2. Et plus généralement, l'utilisation de ce kit d'assemblage peut être recommandée pour une grande variété de sols (caravane, voitures dans le domaine ferroviaire, véhicules dans le domaine aéronautique, et grosso modo tout type de sol devant recevoir du public et devant être isolant).

Il doit être évident pour les personnes versées dans l'art que la présente invention permet des modes de réalisation sous de nombreuses autres formes spécifiques sans l'éloigner du domaine d'application de l'invention comme revendiqué.

Ainsi, bien que le plancher 1 a été décrit comme composé d'enveloppes externes 4 individuelles définissant une seule cavité, on comprend qu'un plancher selon l'invention peut comporter des enveloppes 4 qui présentent une ou plusieurs parois intermédiaires (par exemple des parois intermédiaires perpendiculaires entre elles) pour partitionner le volume intérieur V en plusieurs cavités (et formant plusieurs caissons 5 ayant une paroi de fond 5a commune).

De la même façon, on comprend que les deux couches 11 et 13, qui permettent d'obtenir respectivement un espacement entre les panneaux 3 de type PIV et le fond 5a et un espacement par rapport à l'élément de revêtement 6, peuvent être réalisés différemment, et éventuellement avec utilisation de couche de collage. Par exemple, l'élément de protection 20 peut être d'abord collé à la face inférieure 6a avant que ce dernier ne soit fixé au caisson 5.

## Revendications

1. Plancher thermiquement isolant (1) pour doubler une paroi de sol (S), comprenant :

   - une couche décorative (14) de revêtement, formant une couche supérieure du plancher (1) ;
   - des panneaux (3) isolants ayant chacun une forme de plaque, chacun des panneaux comprenant un matériau poreux (3a) résistant à la compression et une enveloppe barrière (3b) étanche aux gaz, fermée sous vide, qui renferme le matériau poreux, les panneaux (3) étant répartis en au moins une couche d'isolation thermique (12) espacée par rapport à la couche décorative (14), et de préférence située entre des moyens d'isolation acoustique (11) et la couche décorative (14) ;
   - au moins une couche de protection mécanique (13), isolante à l'humidité et agencée entre la couche d'isolation thermique (12) et la couche décorative (14), comprenant une pluralité d'éléments de protection (20) ;
   - une ossature pour fixer et maintenir les panneaux (3) sous la couche décorative (14), de sorte que ladite couche d'isolation thermique présente une face supérieure du côté de la couche décorative et une face inférieure opposée à la face supérieure, l'ossature comprenant une pluralité de caissons (5) rigides structurant la couche d'isolation thermique (12), sachant que chaque caisson (5) est pourvu d'un fond (5a), d'un ensemble de parois latérales (8) et d'une ouverture supérieure (7) délimitée par un bord supérieur (5b) annulaire du caisson ;

   dans lequel le volume intérieur des caissons (5) contient au moins un des panneaux isolants (3) ;
   et dans lequel la couche décorative (14) comprend des éléments de revêtement (6) rigides qui comprennent chacun une face inférieure (6a) en vis-à-vis de, et de préférence en contact avec, un des éléments de protection (20), les éléments de revêtement (6) rigides comprenant en outre des organes d'interconnexion (10) pour connecter bord à bord deux éléments de revêtement adjacents, **caractérisé en ce que** le plancher thermiquement isolant (1) comporte en outre les moyens d'isolation acoustique (11) qui sont distincts de la couche de protection mécanique (13) et sous forme d'une couche formée d'éléments d'isolation acoustique (9), ledit volume intérieur étant délimité par l'ensemble de parois latérales (8) et rempli par un ensemble multicouche qui ne s'étend pas au-delà du bord supérieur (5b), ledit ensemble multicouche comprenant :

   - un des éléments d'isolation acoustique (9) du côté du fond (5a) du caisson (5) au-dessus du plan de base du caisson (5) ;
   - un des éléments de protection mécanique (20), plus proche de l'ouverture supérieure (7) que la couche d'isolation thermique (12) ;
   - un des panneaux (3) isolants, à distance de l'ouverture supérieure (7) et entre ledit élément d'isolation acoustique (9) et ledit élément de protection mécanique (20).

2. Plancher selon la revendication 1, dans lequel les éléments de revêtement (6) présentent une épaisseur déterminée (e1) telle que l'encombrement en hauteur des éléments de revêtement (6) est inférieur à celui des caissons (5).

3. Plancher selon la revendication 1 ou 2, dans lequel chacun des éléments de protection (20) est isolant à l'humidité et en contact avec ledit ensemble de parois latérales (8) du caisson dans lequel il est disposé, ce grâce à quoi un effet barrière aux liquides est obtenu dans chaque caisson (5) pour protéger les panneaux (3) de la couche d'isolation thermique (12).

4. Plancher selon l'une quelconque des revendications 1 à 3, dans lequel les éléments de revêtement (6) obturent chacun hermétiquement l'ouverture (7) d'un caisson (5), sachant que le volume intérieur des caissons (5) contient au moins un des éléments d'isolation acoustique (9).

5. Plancher selon la revendication 4, comprenant des jonctions (J) qui s'étendent entièrement au-dessus des caissons (5) pour former la couche décorative (14), et dans lequel les éléments de revêtement (6) ont un périmètre sensiblement identique au périmètre des caissons (5), sachant que les jonctions (J) pour former la couche décorative (14) sont décalées latéralement par rapport aux ouvertures (7) respectives des caissons, chaque caisson (5) ayant une unique ouverture (7).

6. Plancher selon l'une quelconque des revendications 4 et 5, dans lequel chacun des éléments de revêtement (6) comprend :

   - sur sa face inférieure (6a), une zone annulaire (60) de raccordement qui est fixée hermétiquement au bord supérieur (5b) du caisson (5), de préférence par l'intermédiaire d'une couche de colle ; et
   - au moins une face périphérique (6c) adjacente à la zone annulaire (60) et qui est adaptée pour s'engager contre une face intérieure (8a) de la paroi latérale (8) du caisson associé.

7. Plancher selon l'une quelconque des revendications 4 à 6, dans lequel les moyens d'isolation acoustique comprennent une couche formée d'éléments d'isolation acoustique (9) insérés chacun dans ledit volume intérieur (V) et recouvrant le fond (5a) des caissons (5).

8. Plancher selon l'une quelconque des revendications 4 à 7, dans lequel les éléments de protection (20), qui sont séparés les uns des autres, s'étendent chacun dans le volume intérieur d'un des caissons (5) et sont superposés sur la face supérieure (F1) d'un des panneaux isolants (3), de préférence directement superposés sur cette face supérieure (F1) sans couche de collage intermédiaire.

9. Plancher selon l'une quelconque des revendications précédentes, dans lequel les panneaux (3) ont chacun :

   - une épaisseur inférieure ou égale à 35 mm ; et
   - quatre côtés dont deux côtés opposés parallèles ;

   sachant que les caissons (3) ont une hauteur (H) inférieure ou égale à 50 mm et sont agencés pour former des rangées en bordant lesdits deux côtés parallèles des panneaux (3) dans les rangées.

10. Plancher selon l'une quelconque des revendications précédentes, dans lequel les éléments de revêtement (6) ont une même épaisseur (e1) inférieure à l'épaisseur de la couche d'isolation thermique (12), et de préférence inférieure à 10 mm, l'épaisseur (e) de chacune des parois latérales (8) des caissons (5) étant inférieure à ladite épaisseur (e1) des éléments de revêtement (6), et de préférence égale à 1 ou 2 mm.

11. Plancher selon l'une quelconque des revendications précédentes, dans lequel chacune des parois latérales (8) des caissons (5) est réalisée en un matériau ayant une conductivité thermique inférieure ou égale à 0,25 W m$^{-1}$ K$^{-1}$, et de préférence inférieure à 0,1 W m$^{-1}$ K$^{-1}$.

12. Module de plancher (2) préfabriqué, destiné à être assemblé avec au moins un module identique pour former un plancher (1) thermiquement isolant de doublage d'une paroi de sol (S), comprenant :

   - un élément de revêtement (6) rigide comprenant des organes d'interconnexion (10) pour une connexion bord à bord avec un élément de revêtement adjacent d'un module identique lors d'un assemblage entre modules (2) ;
   - un caisson (5) rigide pourvu d'un fond (5a), de parois latérales (8) délimitant un volume intérieur et d'une ouverture (7), le caisson formant une enveloppe rigide externe (4) du module de plancher lorsque l'ouverture (7) est hermétiquement obturée par ledit élément de revêtement (6) rigide ; et
   - un ensemble multicouche comprenant un panneau (3) de type Panneau Isolant sous Vide (PIV) ;

   dans lequel l'élément de revêtement (6) présente une face supérieure (6b) décorative sensiblement plane et une face inférieure (6a) fixée à un bord supérieur annulaire (5b) du caisson (5), ladite ouverture (7) étant délimitée par le bord supérieur (5b), **caractérisé en ce que** ledit ensemble multicouche comprend :

   - un élément d'isolation acoustique (9) du côté du fond (5a) du caisson (5) au-dessus du plan de base du caisson (5) au-dessus du plan de base du module ;
   - au moins un élément de protection mécanique (20) qui inclut un matériau formant une barrière à l'humidité ; et
   - ledit panneau (3) de type Panneau Isolant sous Vide (PIV) qui s'étend entre l'élément d'isolation acoustique (9) et ledit élément de protection mécanique (20) ;

   le volume intérieur étant rempli par l'ensemble multicouche qui ne s'étend pas au-delà du bord supérieur (5b), la face inférieure (6a) étant en vis-à-vis de, et de préférence en contact avec, l'un au moins des éléments de protection (20).

13. Kit d'assemblage pour former le plancher de la revendication 1, **caractérisé en ce qu'**il comprend une pluralité de modules (2) selon la revendication 12.

14. Procédé de fabrication d'un module de plancher, par utilisation d'un caisson (5) rigide pourvu d'un fond (5a) qui définit un plan de base du module, de parois latérales (8) et d'une ouverture (7) opposée au fond, le procédé comprenant les étapes successives suivantes :

   - remplir le caisson (5), par insertion au travers de l'ouverture (7) d'au moins un panneau (3) de type Panneau Isolant sous Vide (PIV) ;
   - obturer hermétiquement ladite ouverture (7) par une paroi rigide formée de préférence par au moins un élément de revêtement (6) rigide, et placer ledit élément de revêtement (6) sur le caisson (5) et parallèlement au fond (5a) dans la position d'obturation, de façon à ce qu'il présente une face supérieure (6b) décorative sensiblement plane parallèle audit plan de base et des organes d'interconnexion (10) qui s'étendent au-dessus du caisson (5) et permettent une connexion bord à bord avec un élément de revêtement adjacent d'un module identique lors d'un assemblage entre modules (2) ;

le procédé comprenant en outre l'étape consistant essentiellement à :

- placer au moins un élément de protection mécanique (20), qui inclut au moins un matériau formant une barrière à l'humidité, entre ledit panneau (3) et l'élément de revêtement (6),

**caractérisé en ce qu'**un élément d'isolation acoustique (9), distinct de l'élément de protection mécanique (20), est formé et/ou placé du côté du fond (5a) du caisson (5), au-dessus du plan de base du module et avant l'insertion du panneau (3), ce grâce à quoi le volume intérieur (V) du caisson est rempli par un ensemble multicouche qui comprend :

- l'élément d'isolation acoustique (9) ;
- ledit panneau (3) entre ledit élément d'isolation acoustique (9) et ledit élément de protection mécanique (20) ;
- ledit élément de protection mécanique (20) ;

l'ensemble multicouche ne s'étendant pas au-delà d'un bord supérieur (5b) annulaire du caisson (5) qui délimite ladite ouverture (7).

## Patentansprüche

1. Wärmeisolierender Boden (1) zur Verkleidung einer Bodenwand (S), umfassend:

- eine dekorative Deckschicht (14), die eine obere Schicht des Bodens (1) bildet,
- Dämmplatten (3), die jeweils eine Plattenform aufweisen, wobei jede der Platten ein druckfestes poröses Material (3a) und eine gasdichte, vakuumversiegelte Barrierehülle (3b) umfasst, die das poröse Material umschließt, wobei die Platten (3) unterteilt sind in wenigstens eine Wärmeisolierschicht (12), die zu der Dekorschicht (14) beabstandet ist und bevorzugt zwischen schallisolierenden Mitteln (11) und der Dekorschicht (14) angeordnet ist,
- wenigstens eine mechanische Schutzschicht (13), die feuchtigkeitsisolierend ist und zwischen der Wärmeisolierschicht (12) und der Dekorschicht (14) angeordnet ist, und die eine Mehrzahl von Schutzelementen (20) umfasst,

- ein Gerüst zum Befestigen und Halten der Platten (3) unter der Dekorschicht (14), so dass die Wärmeisolierschicht eine Oberseite auf der Seite der Dekorschicht und eine der Oberseite gegenüberliegende Unterseite aufweist, wobei das Gerüst eine Vielzahl von starren Kassetten (5) umfasst, die die Wärmeisolierschicht (12) strukturieren, wobei jede Kassette (5) mit einem Boden (5a), einer Anordnung von Seitenwänden (8) und einer oberen Öffnung (7) versehen ist, die durch einen ringförmigen oberen Rand (5b) der Kassette begrenzt ist,

wobei das Innenvolumen der Kassetten (5) wenigstens eine der Isolierplatten (3) enthält, und wobei die Dekorschicht (14) starre Beschichtungselemente (6) umfasst, die jeweils eine untere Fläche (6a) aufweisen, die einem der Schutzelemente (20) zugewandt ist und bevorzugt mit diesem in Kontakt steht, wobei die starren Beschichtungselemente (6) ferner Verbindungselemente (10) für eine Rand-zu-Rand Verbindung zweier benachbarter Beschichtungselemente umfassen, **dadurch gekennzeichnet, dass** der wärmeisolierende Boden (1) ferner schallisolierende Mittel (11) umfasst, die von der mechanischen Schutzschicht (13) separat sind und in Form einer aus Schallisolierelementen (9) gebildeten Schicht vorliegen, wobei das Innenvolumen durch die Anordnung von Seitenwänden (8) begrenzt und durch eine mehrschichtige Anordnung ausgefüllt ist, die sich nicht über den oberen Rand (5b) hinaus erstreckt, wobei die mehrschichtige Anordnung umfasst:

- eines der Schallisolierelemente (9) auf der Seite des Bodens (5a) der Kassette (5) oberhalb der Basisebene der Kassette (5),
- eines der mechanischen Schutzelemente (20), näher an der oberen Öffnung (7) als die Wärmeisolierschicht (12),
- eine der Isolierplatten (3), beabstandet zu der oberen Öffnung (7) und zwischen dem Schallisolierelement (9) und dem mechanischen Schutzelement (20).

2. Boden nach Anspruch 1, wobei die Beschichtungselemente (6) eine vorgegebene Dicke (e1) aufweisen, so dass die Bauhöhe der Beschichtungselemente (6) kleiner ist als diejenige der Kassetten (5).

3. Boden nach Anspruch 1 oder 2, wobei jedes der Schutzelemente (20) feuchtigkeitsisolierend ist und mit der Anordnung von Seitenwänden (8) der Kassette, in der es angeordnet ist, in Kontakt steht, wodurch in jeder Kassette (5) eine Flüssigkeitsbarrierewirkung zum Schutz der Platten (3) der Wärmeisolierschicht (12) erzielt wird.

4. Boden nach einem der Ansprüche 1 bis 3, wobei die Beschichtungselemente (6) jeweils die Öffnung (7) einer Kassette (5) hermetisch abdichten, wobei der Innenraum der Kassetten (5) wenigstens eines der Schallisolierelemente (9) enthält.

5. Boden nach Anspruch 4, welcher Fugen (J) umfasst, die sich zur Bildung der Dekorschicht (14) vollständig über die Kassetten (5) erstrecken, und wobei die Beschichtungselemente (6) einen Umfang aufweisen, der im Wesentlichen identisch mit dem Umfang der Kassetten (5) ist, wobei die Fugen (J) zur Bildung der Dekorschicht (14) seitlich versetzt zu den jeweiligen Kassettenöffnungen (7) angeordnet sind, wobei jede Kassette (5) eine einzige Öffnung (7) aufweist.

6. Boden nach einem der Ansprüche 4 und 5, wobei jedes der Beschichtungselemente (6) umfasst:

 - auf seiner Unterseite (6a) einen ringförmigen Verbindungsbereich (60), der an dem oberen Rand (5b) der Kassette (5) hermetisch befestigt ist, bevorzugt mittels einer Klebeschicht, und
 - wenigstens eine Umfangsfläche (6c), die an den ringförmigen Bereich (60) angrenzt und dazu geeignet ist, an einer Innenfläche (8a) der Seitenwand (8) der zugehörigen Kassette einzugreifen.

7. Boden nach einem der Ansprüche 4 bis 6, wobei die schallisolierenden Mittel eine Schicht aus Schallisolierelementen (9) umfassen, die jeweils in das Innenvolumen (V) eingesetzt sind und den Boden (5a) der Kassetten (5) bedecken.

8. Boden nach einem der Ansprüche 4 bis 7, wobei sich die voneinander getrennten Schutzelemente (20) jeweils in das Innenvolumen einer der Kassetten (5) erstrecken und auf der Oberseite (F1) einer der Isolierplatten (3) aufliegen, bevorzugt direkt auf dieser Oberseite (F1) ohne eine dazwischenliegende Klebeschicht aufliegen.

9. Boden nach einem der vorhergehenden Ansprüche, wobei die Platten (3) jeweils aufweisen:

 - eine innere Dicke von kleiner gleich 35 mm, und
 - vier Seiten, von denen zwei gegenüberliegende parallele Seiten sind, wobei die Kassetten (3) eine Höhe (H) kleiner gleich 50 mm aufweisen und derart angeordnet sind, dass sie Reihen bilden, indem sie an die beiden parallelen Seiten der Platten (3) in den Reihen angrenzen.

10. Boden nach einem der vorhergehenden Ansprüche, wobei die Beschichtungselemente (6) eine gleiche Dicke (e1) kleiner als die Dicke der Wärmeisolierschicht (12), und bevorzugt kleiner als 10 mm aufweisen, wobei die Dicke (e) jeder der Seitenwände (8) der Kassetten (5) kleiner als die Dicke (e1) der Beschichtungselemente (6) und bevorzugt gleich 1 oder 2 mm ist.

11. Boden nach einem der vorhergehenden Ansprüche, wobei jede der Seitenwände (8) der Kassetten (5) aus einem Material mit einer Wärmeleitfähigkeit kleiner gleich 0,25 W m$^{-1}$ K$^{1}$, und bevorzugt kleiner 0,1 W m$^{-1}$ K$^{-1}$, hergestellt ist.

12. Vorgefertigtes Bodenmodul (2), welches dazu bestimmt ist, mit wenigstens einem identischen Modul zusammengefügt zu werden, um einen wärmeisolierenden Boden (1) zum Verkleiden einer Bodenwand (S) zu bilden, umfassend:

 - ein starres Beschichtungselement (6), umfassend Verbindungselemente (10) für eine Rand-zu-Rand-Verbindung mit einem benachbarten Beschichtungselement eines identischen Moduls, bei einem Zusammenfügen von Modulen (2),
 - eine starre Kassette (5), die mit einem Boden (5a), ein Innenvolumen begrenzenden Seitenwänden (8), und einer Öffnung (7) versehen ist, wobei die Kassette eine starre Außenhülle (4) des Bodenmoduls bildet, wenn die Öffnung (7) durch das starre Beschichtungselement (6) hermetisch verschlossen ist, und
 - eine mehrschichtige Anordnung, die eine Platte (3) des Typs Vakuum-Isolierplatte (PIV) umfasst,

wobei das Beschichtungselement (6) eine im Wesentlichen flache dekorative Oberseite (6b) und eine Unterseite (6a) aufweist, die an einem ringförmigen oberen Rand (5b) der Kassette (5) befestigt ist, wobei die Öffnung (7) durch den oberen Rand (5b) begrenzt ist,
**dadurch gekennzeichnet, dass** die mehrschichtige Anordnung umfasst:

 - ein Schallisolierelement (9) auf der Seite des Bodens (5a) der Kassette (5) oberhalb der Basisebene der Kassette (5) oberhalb der Basisebene des Moduls,
 - wenigstens ein mechanisches Schutzelement (20), welches ein Material umfasst, das eine Feuchtigkeitssperre bildet, und
 - die Platte (3) vom Typ Vakuum-Isolierplatte (PIV), die sich zwischen dem Schallisolierelement (9) und dem mechanischen Schutzelement (20) erstreckt;

wobei das Innenvolumen durch die mehrschichtige Anordnung ausgefüllt ist, die sich nicht über den oberen Rand (5b) hinaus erstreckt, wobei die untere Fläche (6a) wenigstens einem der Schutzelemente (20) zugewandt ist und bevorzugt mit diesem in Kontakt steht.

13. Bausatz zur Bildung des Fußbodens nach Anspruch 1, **dadurch gekennzeichnet, dass** er eine Vielzahl von Modulen (2) nach Anspruch 12 umfasst.

14. Verfahren zur Herstellung eines Bodenmoduls unter Verwendung einer starren Kassette (5), die mit einem eine Basisebene des Moduls definierenden Boden (5a), Seitenwänden (8) und einer dem Boden gegenüberliegenden Öffnung (7) versehen ist, wobei das Verfahren die folgenden aufeinanderfolgenden Schritte umfasst:

   - Füllen der Kassette (5), indem durch die Öffnung (7) wenigstens eine Platte (3) des Typs Vakuum-Isolierplatte (PIV) eingeführt wird,
   - hermetisches Verschließen der Öffnung (7) durch eine starre Wand, die bevorzugt durch wenigstens ein starres Beschichtungselement (6) gebildet wird, und Anordnen des Beschichtungselements (6) auf der Kassette (5) und parallel zum Boden (5a) in der Verschlussposition, so dass es eine im Wesentlichen ebene, dekorative Oberseite (6b) parallel zu der Basisebene aufweist, und Verbindungselemente (10), die sich oberhalb der Kassette (5) erstrecken und bei einer Anbringung zwischen Modulen (2) eine Rand-zu-Rand-Verbindung mit einem benachbarten Verkleidungselement eines identischen Moduls ermöglichen,

   wobei das Verfahren ferner den Schritt umfasst, welcher im Wesentlichen besteht aus:

   - Anordnen wenigstens eines mechanischen Schutzelements (20), das wenigstens ein eine Feuchtigkeitssperre bildendes Material enthält, zwischen der Platte (3) und dem Beschichtungselement (6),

   **dadurch gekennzeichnet, dass** ein Schallisolierelement (9), welches von dem mechanischen Schutzelement (20) separat ist, auf der Bodenseite (5a) der Kassette (5) oberhalb der Basisebene des Moduls und vor dem Einsetzen der Platte (3) gebildet und/oder angeordnet ist, wodurch das Innenvolumen (V) der Kassette durch eine mehrschichtige Anordnung ausgefüllt wird, welche umfasst:

   - das Schallisolierelement (9),
   - die Platte (3) zwischen dem Schallisolierelement (9) und dem mechanischen Schutzelement (20),
   - das mechanische Schutzelement (20),

wobei sich die mehrschichtige Anordnung nicht über einen ringförmigen oberen Rand (5b) der die Öffnung (7) begrenzenden Kassette (5) hinaus erstreckt.

## Claims

1. A thermally insulating floor (1) for lining a flooring wall (S), comprising:

   - a decorative coating layer (14), forming an upper layer of the floor (1);
   - insulating panels (3) each having a plate shape, each of the panels comprising a compression-resistant porous material (3a) and a gas-tight barrier envelope (3b), closed under vacuum, which contains the porous material, the panels (3) being distributed in at least one thermal insulation layer (12) spaced relative to the decorative layer (14), and preferably located between sound insulation means (11) and the decorative layer (14);
   - at least one mechanical protective layer (13), which is insulating against moisture and arranged between the thermal insulation layer (12) and the decorative layer (14), comprising a plurality of protection elements (20);
   - a framework for fixing and maintaining the panels (3) under the decorative layer (14), so that said thermal insulation layer has an upper face on the side of the decorative layer and a lower face opposite the upper face, the framework comprising a plurality of rigid boxes (5) structuring the thermal insulation layer (12), knowing that each box (5) is provided with a bottom (5a), a set of side walls (8) and an upper opening (7) delimited by an upper annular edge (5b) of the box;

   wherein the internal volume of the boxes (5) contains at least one of the insulating panels (3);
   and wherein the decorative layer (14) comprises rigid coating elements (6) which each comprise a lower face (6a) facing, and preferably in contact with, one of the protection elements (20), the rigid coating elements (6) further comprising interconnection members (10) for connecting two adjacent coating elements edge to edge,
   **characterised in that** the thermally insulating floor (1) further includes the sound insulation means (11) which are distinct from the mechanical protective layer (13) and in the shape of a layer formed of sound insulation elements (9), said internal volume being delimited by the set of side walls (8) and filled by a multilayer assembly which does not extend beyond the upper edge (5b), said multilayer assembly comprising:

- one of the acoustic insulation elements (9) on the bottom side (5a) of the box (5) above the base plane of the box (5);
- one of the mechanical protection elements (20), closer to the upper opening (7) than the thermal insulation layer (12);
- one of the insulating panels (3), at a distance from the upper opening (7) and between said sound insulation element (9) and said mechanical protection element (20).

2. The floor according to claim 1, wherein the coating elements (6) have a determined thickness (e1) such that the overall height of the coating elements (6) is less than that of the boxes (5).

3. The floor according to claim 1 or 2, wherein each of the protection elements (20) is insulating against moisture and in contact with said set of side walls (8) of the box wherein it is disposed, whereby a liquid barrier effect is obtained in each box (5) to protect the panels (3) of the thermal insulation layer (12).

4. The floor according to any one of claims 1 to 3, wherein the coating elements (6) each hermetically close the opening (7) of a box (5), knowing that the internal volume of the boxes (5) contains at least one of the acoustic insulation elements (9),

5. The floor according to claim 4, comprising junctions (J) which extend entirely above the boxes (5) to form the decorative layer (14), and wherein the coating elements (6) have a perimeter which is substantially identical to the perimeter of the boxes (5), knowing that the junctions (J), to form the decorative layer (14), are offset laterally relative to the respective openings (7) of the boxes, each box (5) having a single opening (7).

6. The floor according to any one of claims 4 and 5, wherein each of the coating elements (6) comprises:

   - on its lower face (6a), an annular connection area (60) which is hermetically fixed to the upper edge (5b) of the box (5), preferably by means of a layer of glue; and
   - at least one peripheral face (6c) adjacent to the annular area (60) and which is adapted to engage against an inner face (8a) of the side wall (8) of the associated box.

7. The floor according to any one of claims 4 to 6, wherein the sound insulation means comprise a layer formed of sound insulation elements (9) each inserted into said internal volume (V) and covering the bottom (5a) of the boxes (5).

8. The floor according to any one of claims 4 to 7, wherein the protection elements (20), which are separated from each other, each extend into the internal volume of one of the boxes (5) and are superimposed on the upper face (F1) of one of the insulating panels (3), preferably directly superimposed on this upper face (F1) without an intermediate adhesive layer.

9. The floor according to any one of the preceding claims, wherein the panels (3) each have:

   - a thickness less than or equal to 35 mm; and
   - four sides including two opposite parallel sides;

   knowing that the boxes (3) have a height (H) less than or equal to 50 mm and are arranged to form rows by bordering said two parallel sides of the panels (3) in the rows.

10. The floor according to any one of the preceding claims, wherein the coating elements (6) have the same thickness (e1) less than the thickness of the thermal insulation layer (12), and preferably less than 10 mm, the thickness (e) of each of the side walls (8) of the boxes (5) being less than said thickness (e1) of the coating elements (6), and preferably equal to 1 or 2 mm.

11. The floor according to any one of the preceding claims, wherein each of the side walls (8) of the boxes (5) is made of a material having a thermal conductivity less than or equal to $0.25 \text{ W m}^{-1} \text{ K}^{-1}$, and preferably less than $0.1 \text{ W m}^{-1} \text{ K}^{-1}$.

12. A pre-manufactured floor module (2), intended to be assembled with at least one identical module to form a thermally insulating floor (1) for lining a flooring wall (S), comprising:

   - a rigid coating element (6) comprising interconnection members (10) for an edge-to-edge connection with an adjacent coating element of an identical module during assembly between modules (2);
   - a rigid box (5) provided with a bottom (5a), side walls (8) delimiting an internal volume and an opening (7), the box forming an external rigid casing (4) of the floor module when the opening (7) is hermetically closed by said rigid coating element (6); and
   - a multilayer assembly comprising a panel (3) of the Vacuum Insulating Panel (VIP) type;

   wherein the coating element (6) has a substantially flat decorative upper face (6b) and a lower face (6a) fixed to an annular upper edge (5b) of the box (5), said opening (7) being delimited by the upper edge (5b),
   **characterised in that** said multilayer assembly comprises:

- an acoustic insulation element (9) on the bottom side (5a) of the box (5) above the base plane of the box (5) above the base plane of the module;
- at least one mechanical protection element (20) which includes a material forming a moisture barrier; and
- said panel (3) of the Vacuum Insulating Panel (VIP) type which extends between the sound insulation element (9) and said mechanical protection element (20);

the internal volume being filled by the multilayer assembly which does not extend beyond the upper edge (5b), the lower face (6a) being facing, and preferably in contact with, the at least one of the protection elements (20).

13. An assembly kit for forming the floor of claim 1, **characterised in that** it comprises a plurality of modules (2) according to claim 12.

14. A method for manufacturing a floor module, by using a rigid box (5) provided with a bottom (5a) which defines a base plane of the module, side walls (8) and an opening (7) opposite the bottom, the method comprising the following successive steps:

- filling the box (5) by inserting through the opening (7) at least one panel (3) of the Vacuum Insulating Panel (VIP) type;
- hermetically closing said opening (7) by a rigid wall preferably formed by at least one rigid coating element (6), and placing said coating element (6) on the box (5) and parallel to the bottom (5a) in the closed position, so that it has a substantially flat decorative upper face (6b) parallel to said base plane and interconnection members (10) which extend above the box (5) and allow edge-to-edge connection with an adjacent coating element of an identical module during assembly between modules (2); the method further comprising the step consisting essentially of:
- placing at least one mechanical protection element (20), which includes at least one material forming a moisture barrier, between said panel (3) and the coating element (6),

**characterised in that** a sound insulation element (9), separate from the mechanical protection element (20), is formed and/or placed on the bottom side (5a) of the box (5), above the base plane of the module and before the insertion of the panel (3), whereby the internal volume (V) of the box is filled with a multilayer assembly which comprises:

- the sound insulation element (9);
- said panel (3) between said sound insulation element (9) and said mechanical protection element (20);
- said mechanical protection element (20);

the multilayer assembly not extending beyond an upper annular edge (5b) of the box (5) which delimits said opening (7).

**FIG. 1**

**FIG. 2**

## FIG. 3

## FIG. 4

FIG. 5

**EP 2 860 320 B1**

## RÉFÉRENCES CITÉES DANS LA DESCRIPTION

**Documents brevets cités dans la description**

- WO 2013086005 A

- DE 202007001461 U1